# EUROPEAN PATENT APPLICATION

(11) **EP 1 398 858 A1**
(43) Date of publication of application: **17.03.2004**
(21) Application number: 03020273.3
(22) Date of filing: 08.09.2003
(51) Int. Cl.: H02G 3/32

(54) **Band clamp**

(30) Priority: 10.09.2002 JP 2002264685
(71) Applicant: Sumitomo Wiring Systems, Ltd., Yokkaichi-City, Mie, 510-8503 (JP)
(72) Inventor: Uchida, Yoshimi, Yokkaichi-city Mie 510-8503 (JP); Ito, Takeharu, Yokkaichi-city Mie 510-8503 (JP)
(74) Representative: Herzog, Markus, Dipl.-Phys. Dr.

(57) **Abstract**

A one-piece band clamp that simplifies the installation of a wire harness. The band clamp includes a band portion whose separated ends form a space, and a pair of insertion members, each formed at an end of a band portion adjacent to the space. The insertion members include insertion plates, lock fingers which include lip portions extending outward and downward from the upper edge of the insertion plates, a lock claw formed on at least one insertion plate, and at least one lock notch formed on the facing insertion plate. The wire harness is inserted into a band portion through the space, the lock claws are hooked over the lock notches to join insertion members, which are then inserted into an aperture in a vehicle body panel. Lip portions of the lock fingers press against the edges of the aperture to secure the band clamp to the vehicle body panel.

## Description

### BACKGROUND OF THE INVENTION

### 1. Field of the Invention

The present invention relates to a band clamp, and more particularly to a band clamp that attaches an automotive wire harness to an aperture in a vehicle body panel through an improved installation procedure.

### 2. Description of Related Art

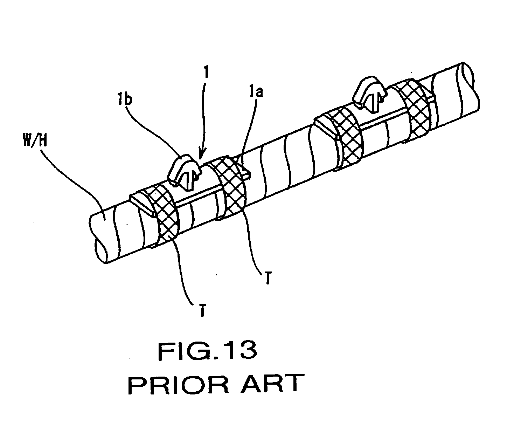

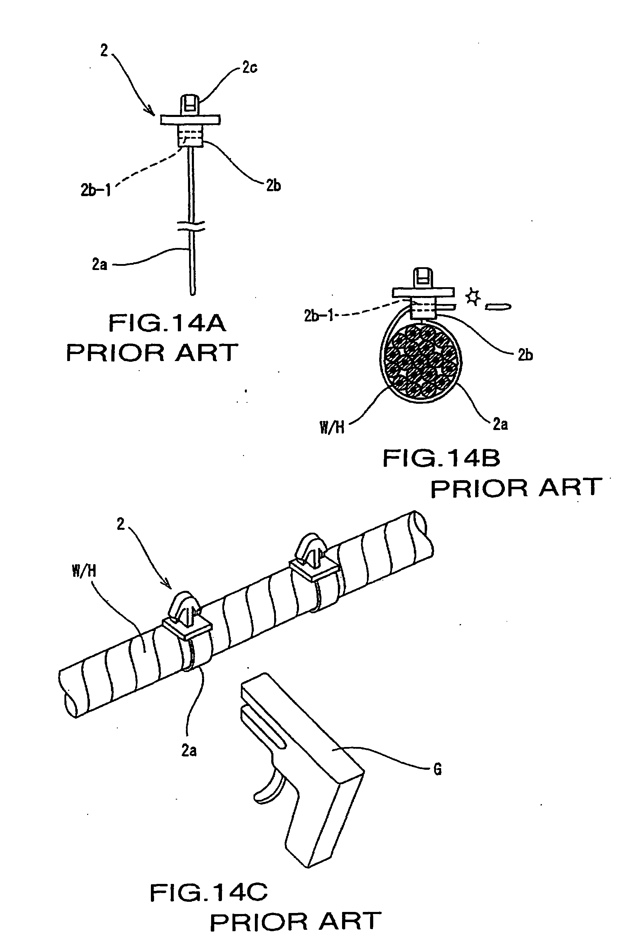

Conventionally, wire harnesses have been attached to a vehicle body through a tape-wrapped clamp 1 as shown in Figure 13, or a manually tightened band clamp 2 as shown in Figures 14A-14C. As illustrated in Figure 13, clamp 1 is a one-piece synthetic plastic resin fixture incorporating a base plate 1a and an anchor peg 1b that extends upward from the mid-portion of base plate 1a, the purpose of peg 1b being to secure the clamp to the vehicle body. Clamp 1 is secured to wire harness W/H by wrapping tape T around wire harness W/H and base plate 1 a.

Band clamp 2, as shown in Figure 14A, is a one-piece synthetic plastic resin fixture incorporating band 2a that extends from the lower surface of box-like body 2b, and anchor peg 2c that extends from the upper surface of the box-like body 2b. As shown in Figures 14A and 14B, band clamp 2 secures wire harness W/H by band 2a wrapping around the wire harness and passing through slot 2b-1 in body 2b. Band tightening tool G is used to tighten band 2a which is maintained in a tightly constricted condition around wire harness W/H by a pawl (not shown), formed on an inner surface slot 2b-1, locking against one of many continuous serrations (not shown) formed on the outer surface of band 2a. The excess portion of band 2a that extends from orifice 2b-1 is sheared off and discarded.

As shown in Figure 13, the installation of clamp 1 to wire harness W/H requires a tape wrapping operation, and thus undesirably increases the number of components and procedural steps required to install the wire harness. Moreover, the commonly applied vinyl chloride tape becomes an environmental pollutant when eventually discarded.

There are various problems regarding the installation of band clamp 2 to wire harness W/H as shown in Figures 14A-14C, one being the need to use an additional component in the form of tool G, and another being the additional procedure in which the excess portion of band 2a must be severed and discarded. Other problems exhibited by this type of band clamp are the waste of material that results from cutting off and discarding the excess length of band 2a, the damage that the sharp severed end of band 2a may inflict on adjacent wires, and the possibility of technicians installing the wire harness injuring their hands through inadvertent contact with the sharp severed end of band 2a.

Moreover, because the positions at which clamp 1 (Figure 13) or band clamp 2 (Figures 14A-14C) connect to wire harness W/H cannot be changed once the clamps are attached to the wire harness, a variation in the spacing of the clamps on the wire harness with respect to the spacing of the clamp installation holes in the vehicle (not shown) can prevent the installation of anchor pegs 1b or 2c to the vehicle.

### SUMMARY OF THE INVENTION

Noting the above-described shortcomings in the prior art construction, the present invention provides a band clamp that is able to increase the efficiency of the wire harness installation process, and that allows for easy correction of the differences in spacing between the band clamp positions on the wire harness and the installation aperture positions on the vehicle body.

The invention resolves the above described shortcomings in the prior art through a band-type wire harness clamp that may be inserted into mounting apertures in a vehicle body panel. The band clamp of the present invention is a one-piece fixture including a band portion having ends that can be separated to form a space there between, and a pair of insertion members, one insertion member formed at each end of the band portion adjacent to the space and in opposition to the other insertion member. Each insertion member includes an insertion plate that extends from each end of the band portion adjacent to the space, a lock finger that extends outward and downward from the upper edge of the insertion plate, and a lip portion formed at the end of the lock finger.

An inwardly extending L-shaped lock claw is provided on at least one of the mutually opposed insertion plates, and a lock notch is provided as a cut out portion at the upper edge of the facing insertion plate. The wire harness is inserted into the band portion through the space, and the lock claw is hooked over the lock notch to mutually join the insertion members and securely close the band portion around the wire harness. The joined insertion members are inserted into the mounting aperture in the vehicle body, thereby placing the lip portion of each lock finger securely against the edges of the mounting aperture to secure the wire harness to the vehicle body panel.

The present invention eliminates the need for separate installation components, such as the previously noted tape T and band tightening tool G that are required for the installation of conventional clamps, and significantly improves the efficiency of the wire harness installation process by allowing the attachment of the band clamp to the wire harness by simply hooking the lock claw over the lock notch. Moreover, as the band clamp of the present invention eliminates the need to shear off and discard an excess portion of the band clamp, there is no sharp severed band edge to damage adjacent parts of the wire harness nor injure the installation technician, and waste of material is avoided.

In addition, the band clamp of the present invention need not be previously and permanently attached to the wire harness as is required by conventional tape-attached clamps and band tightened clamps, but may be removably attached to the wire harness through the joining and un-joining of the insertion members. The attachment method permits the positions of multiple band clamps on the wire harness to be adjusted by simply separating the lock claw from the lock notch, thus allowing the positions of the band clamps on the wire harness to be easily changed in cases where the initial spacing of the band clamps on the wire harness may not align with the spacing of the mounting apertures on the vehicle body panel.

Further, a stop tab, which may be formed as an inwardly extending portion of the lower edge of at least one insertion member, is inserted into a tab notch formed within the opposed insertion member to prevent opposed horizontal displacement of the insertion members.

Opposed displacement of the insertion members in the vertical plane is prevented by the contact surfaces formed by hooking the lock claw over the lock notch, and opposed displacement of the insertion members in the horizontal plane is prevented by the contact surfaces formed by the insertion of the stop tab into the tab notch.

An aspect of the present invention provides a band clamp including a band portion having first and second ends; a first insertion member provided on the first end of the band portion and a second insertion member provided on the second end of the band portion; a first lock finger extending outwardly and downwardly from an upper edge of the first insertion member and a second lock finger extending outwardly and downwardly from an upper edge of the second insertion member; and a joining device configured to join together the first and second insertion members; wherein, in a first position of the band clamp, a space is provided between the first insertion member on the first band portion end and the second insertion member on the second band portion end, the space configured to receive a wire harness therethrough, and in a second position, the space is closed and the first insertion member and the second insertion member are joined together by the joining device, the joined together first and second insertion members configured to be inserted into a mounting aperture in a vehicle body panel so that the first and second lock fingers secure the wire harness to the vehicle body panel. Further, the first insertion member may include a first insertion plate extending from the first band portion end; the second insertion member may include a second insertion plate extending from the second band portion end; wherein, in the second position, the first and second insertion plates are joined together forming an insertion peg configured to be inserted into the mounting aperture in the vehicle body panel. Further, the band clamp may further include a first lip portion provided at an end of the first lock finger and a second lip portion provided at an end of the second lock finger; wherein, the first and second lip portions are configured to contact edges of the mounting aperture in the vehicle body panel when the band clamp is in the second position.

In a further aspect of the present invention, the band clamp further includes a first semicircular flange provided on the first insertion member and a second semicircular flange provided on the second insertion member, wherein, in the second position, the first and second semicircular flanges are joined together forming a substantially circular flange, the substantially circular flange configured to contact the edges of the mounting aperture on an opposite surface of the vehicle body panel so that the edges of the mounting aperture are positioned between the first and second lip portions and the substantially circular flange. Additionally, the band clamp may be formed unitarily and in one piece. The joining device may further include an inwardly extending L-shaped lock claw provided on at least one of the insertion members; and a lock notch provided as a recessed portion at an upper edge of a facing one of the insertion members; wherein, by hooking the lock claw over the lock notch the insertion members are joined together and the band portion is securely closed around the wire harness. The band clamp may further include a stop tab provided as an inwardly extending portion of a lower edge of at least one of the insertion members; and a tab notch provided within a facing insertion member; wherein in the second position the stop tab is inserted into the tab notch to form contact surfaces that prevent relative horizontal displacement between the first and second insertion members. Further, the joining device may further include first and second L-shaped lock claws provided on the first insertion member, and a third L-shaped lock claw provided on the second insertion member; and first and second lock notches provided on the second insertion member, the third L-shaped lock claw positioned between the first and second lock notches, and a third lock notch provided on the first insertion member, the third lock notch positioned between the first and second L-shaped lock claws; wherein, by hooking the first, second, and third lock claws over the first, second, and third, lock notches, respectively, the first and second insertion members are joined together and the band portion is securely closed around the wire harness. Further, the band clamp may further include a first stop tab provided as an inwardly extending portion of a lower edge of the first insertion member and a second stop tab provided as an inwardly extending portion of a lower edge of the second insertion member; and a first tab notch provided on the first insertion member and a second tab notch provided on the second insertion member; wherein in the second position the first stop tab is inserted into the second tab notch and the second stop tab is inserted into the first tab notch to form contact surfaces that prevent relative horizontal displacement between the first and second insertion members.

A further aspect of the present invention provides in combination, a vehicle body panel portion; a wire harness; and a band clamp.

### BRIEF DESCRIPTION OF THE DRAWINGS

The above, and other objects, features and advantages of the present invention will be made apparent from the following description of the preferred embodiments, given as nonlimiting examples, with reference to the accompanying drawings in which:
Figure 1 is a perspective view of the band clamp according to a first embodiment of the present invention;
Figure 2 is a side view of the band clamp in the embodiment of Figure 1;
Figure 3 is a cross sectional view of the band clamp in the embodiment of Figure 1;
Figure 4 is a top view of the band clamp in the embodiment of Figure 1;
Figure 5 is a bottom view of the band clamp in the embodiment of Figure 1;
Figure 6 is a perspective view of the band clamp in the embodiment of Figure 1 attached to a wire harness;
Figure 7A is a cross sectional view of the band clamp of the present invention attached to a wire harness shown in Figure 6;
Figure 7B is a side view of the band clamp of the present invention attached to a wire harness shown in Figure 6;
Figure 8 illustrates the spacing between wire harness mounting apertures on a vehicle body;
Figure 9 illustrates the band clamp shown in Figure 8 inserted into the mounting apertures on a vehicle body;
Figure 10 is a perspective view of a wire harness with a plurality of types of band clamps attached thereto;
Figure 11A is a perspective view of the band clamp according to a second embodiment of the present invention;
Figure 11B is a side view of the band clamp of the present invention according to the embodiment of Figure 11A;
Figure 12A is a perspective view of the band clamp according to a third embodiment of the present invention;
Figure 12B is a side view of the band clamp of the present invention according to the embodiment of Figure 12A;
Figure 13 is a perspective view of a conventional wire harness clamp;
Figure 14A is a side view of a conventional band clamp;
Figure 14B is a cross sectional view of the band clamp of Figure 14A attached to a wire harness;
Figure 14C is a perspective view of the band clamp of Figure 14A attached to a wire harness.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

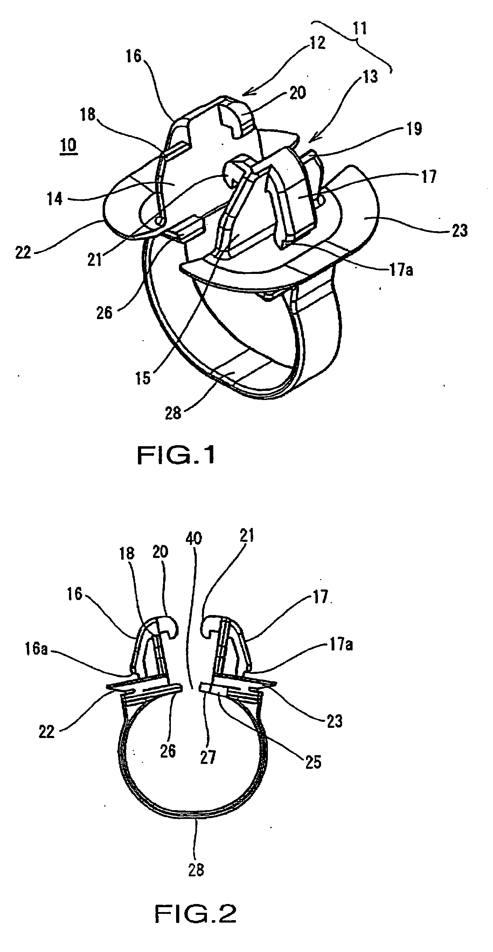

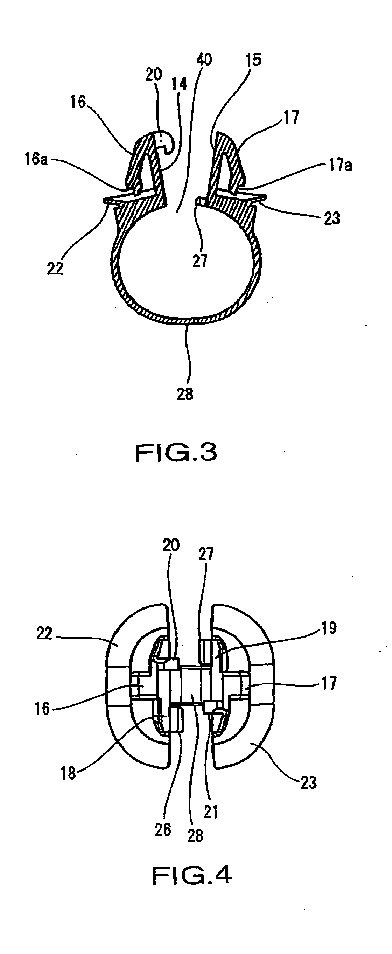

Figures 1-5 illustrate a first embodiment of the band clamp of the present invention. Figure 1 shows band clamp 10 as a single piece including a C-shaped band 28 whose opposed ends may be separated to define a space 40. The band clamp 10 of the present invention may be formed unitarily and in one piece. Further, the band clamp 10 of the present invention may be constructed of any suitable material such as, for example, a synthetic plastic resin. A pair of semi-circular flanges 22 and 23 are formed at the opposed ends of band 28 adjacent to space 40, and insertion members 12 and 13 extend from the upper surfaces of semi-circular flanges 22 and 23. The insertion members 12 and 13 may be joined together to form an insertion peg 11.

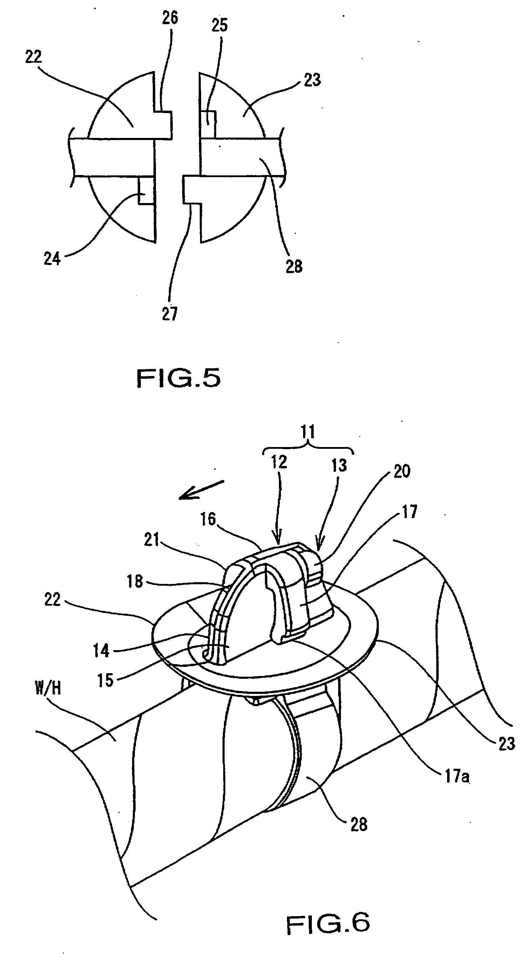

Insertion member 13 includes an insertion plate 15 that extends upward from semi-circular flange 23, a lock finger 17 that extends downward from the center of the top edge of insertion plate 15, and a lip portion 17a that projects from the lower edge of lock finger 17. Lock claw 21 is an L-shaped member that extends inward from the top edge of insertion plate 15, and lock notch 19 is formed at the top edge of insertion plate 15 opposite lock claw 21. As shown in Figures 2, 4, and 5, insertion member 13 also includes stop tab 27 which projects from the lower edge of insertion plate 15 in opposition to lock claw 21 to prevent horizontal dislocation of the lower portion of insertion member 13. As shown in Figures 2 and 5, tab notch 25 is formed on one side of the lower edge of insertion plate 15 as a space into which opposing stop tab 26 may be inserted.

Insertion member 12 is a mirror-image construction of insertion member 13 and is located in opposition thereto. Lock finger 16, which includes lip portion 16a formed at the lower edge thereof, extends outward and downward from the center of the upper edge of insertion plate 14 above flange 22. Lock notch 19 is cut out from one side of the upper edge of insertion plate 15 opposite to L-shaped lock claw 20 that extends inward also from the upper edge of insertion plate 15. As shown in Figures 2, 4, and 5, horizontal displacement prevention stop tab 26 extends from the lower edge of insertion plate 14 on the side of the insertion plate 15 opposite to lock claw 20, and tab notch 24 (see Figure 5) is formed in the lower edge of the side of insertion plate 14 opposite to stop tab 26.

According to the construction of the present invention, the lock claws 20 and 21 are located opposite to lock notches 18 and 19, respectively, and stop tabs 26 and 27 are located opposite to tab notches 24 and 25, respectively.

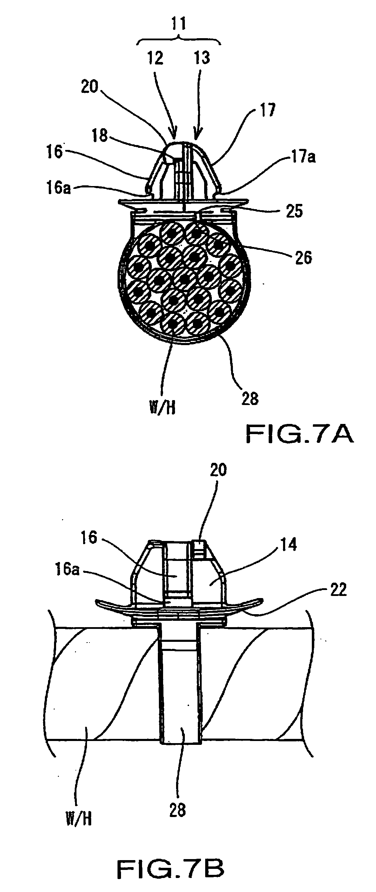

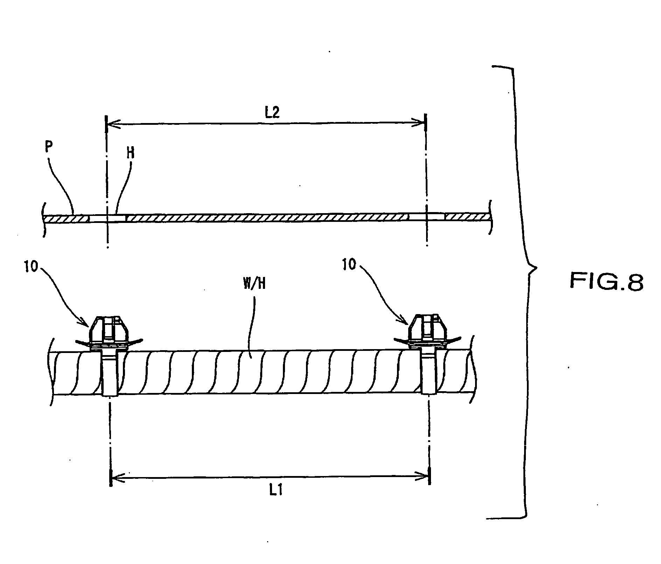

The following will describe the procedure of installing band clamp 10 onto a wire harness W/H. Wire harness W/H is inserted into C-shaped band 28 of band clamp 10 through the space 40, which has been created by the mutual separation of insertion members 12 and 13, as shown in Figure 1. As shown in Figures 7A, 7B, and 8, insertion members 12 and 13 are then pressed together to form a construction in which lock claw 20 on insertion member 12 hooks over lock notch 19 on insertion member 13, and lock claw 21 on insertion member 13 hooks over lock notch 18 on insertion member 12. Insertion peg 11 is thus formed from the joining of insertion members 12 and 13, and a circular flange is formed from the joining of semi-circular flanges 22 and 23.

With insertion members 12 and 13 locked together as shown in Figure 7A, stop tabs 26 and 27 have been inserted into oppositely located tab notches 25 and 24, respectively. The respective hooked joining of lock claws 20 and 21 to lock notches 18 and 19 prevents the opposed vertical displacement of insertion plates 14 and 15, and the respective contact of lock claw 20 and 21 against lock fingers 16 and 17 prevents opposed horizontal displacement of insertion members 12 and 13. The stop tabs 26 and 27 inserted into tab notches 24 and 25, respectively, also prevents horizontal displacement of insertion members 12 and 13. Tabs 26 and 27 are maintained in position by their respective insertion to tab notches 24 and 25, and can be easily removed there from.

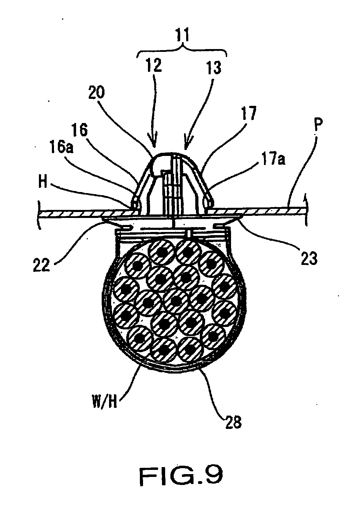

Insertion peg 11, which is formed by the joining of insertion members 12 and 13, includes a pair of lock fingers 16 and 17 that extend downward and outward from the top edges of insertion plates 14 and 15. The distance between lip portions 16a and 17a is larger than the width of mounting aperture H in vehicle body P. Thus, as shown in Figure 9, the edges of the mounting aperture H are sandwiched between lip portions 16a and 17a and flanges 22 and 23, respectively.

The band clamp of the present invention provides at least the advantage of eliminating the need for separate installation components, such as previously noted tape T and band tightening tool G that are required for the installation of the conventional clamps shown in Figures 13 and 14. Further, the band clamp of the present invention significantly improves the efficiency of the wire harness installation process by allowing the band clamp 10 to be attached to wire harness W/H through the mutual joining of insertion members 12 and 13 by simply hooking lock claws 20 and 21 to lock notches 18 and 19, respectively. Further, as the invention eliminates the need to sever and discard an excess portion of band 28, there is no sharp severed band edge to damage the wire harness nor injure the installation technician, and there is no waste created by the installation process nor waste disposal expense.

In addition, the band clamp 10 of the present invention need not be earlier and permanently attached to wire harness W/H as is required by conventional tape-attached clamps and band tightened clamps, but allows the band 28 to be removably attached to wire harness W/H through the convenient joining and un-joining of insertion members 12 and 13. This attachment method allows the position of the band clamp 10 on the wire harness W/H to be adjusted by simply separating lock claws 20 and 21 from lock notches 18 and 19, respectively, thus allowing the positions of multiple band clamps 10 on wire harness W/H to be easily changed in cases where the initial spacing L 1 of band clamps 10 on wire harness W/H may not align with the spacing L2 between mounting apertures H on vehicle body panel P (Figure 8).

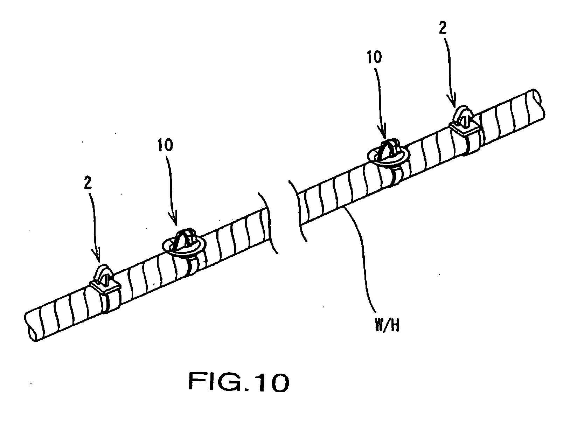

Further, as shown in Figure 10, conventional band clamps 2 must be fixedly attached to wire harness W/H (which can be, for example, a floor harness, engine harness, engine compartment harness or other wire harness component) at points located within specific tolerances needed to align the clamps to mounting points on the vehicle. The band clamp 10 of the present invention, however, may be attached to wire harness W/H at unspecified central locations and conveniently aligned with the vehicle mounting points at the time of installation.

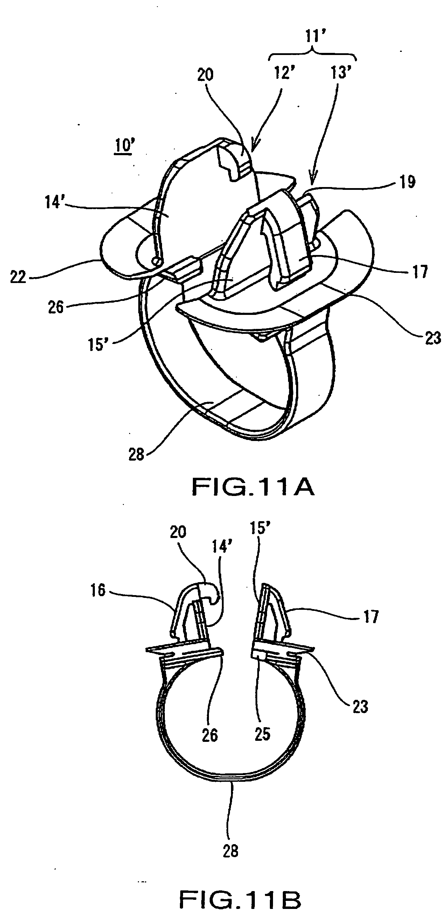

Figures 11A and 11B illustrate a second embodiment of the band clamp of the present invention in the form of a band clamp 10' which utilizes only one lock claw 20 and one lock notch 19 as well as only one horizontal displacement prevention stop tab 26 and one tab notch 25. The positions of stop tab 26 and tab notch 25 may be symmetrically aligned with the positions of lock claw 20 and lock notch 18 in relation to lock fingers 16 and 17.

As there is only one lock claw 20 in this second embodiment, less pressure is required to hook lock claw 20 over lock notch 19 in order to join insertion members 12' and 13'. Moreover, as lateral displacement prevention stop tab 26 and tab notch 25 are in symmetrical alignment with lock claw 20 and lock notch 19, the structure by which lock claw 20 contacts lock finger 17 prevents insertion member 12' from sliding horizontally against insertion member 13' in one direction, and the structure by which stop tab 26 is inserted into tab notch 25 prevents insertion member 12' from sliding horizontally against insertion member 13' in the opposite direction. Descriptions of the second embodiment parts identical to those in the first embodiment have been omitted.

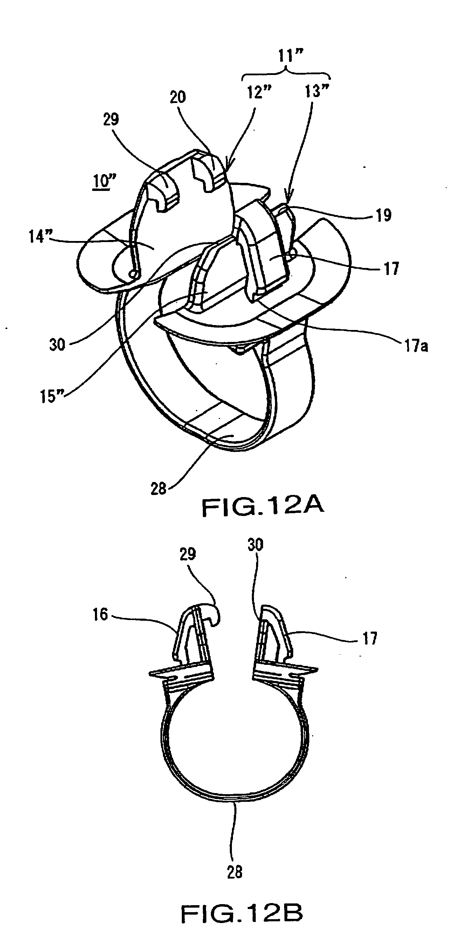

Figures 12A and 12B illustrate a third embodiment of the present invention in the form of band clamp 10" which includes two L-shaped lock claws 20 and 29 that extend from opposite ends of the upper edge of insertion plate 14", and two corresponding lock notches 19 and 30 that are formed on each side of the upper edge of insertion plate 15". This third embodiment does not include a stop tab and tab notch as does the first embodiment.

With lock claws 20 and 29 respectively hooked over lock notches 19 and 30, the construction by which the lock claw 20 maintains contact with one side of lock finger 17 prevents insertion member 12" from sliding in one direction with respect to insertion member 13", and the construction by which lock claw 29 maintains contact with the opposite side of lock finger 17 prevents insertion member 12" from sliding in the opposite direction. Descriptions of the third embodiment parts identical to those of the first embodiment have been omitted.

As previously described, the wire clamp of the present invention provides a significantly improved method of attaching a band-type clamp to a wire harness. The invention eliminates the separate components required to install conventional wire harness clamps, components such as tape and special installation tools, through the use of the L-shaped lock claw that hooks over the lock notch. Moreover, the band clamp of the present invention eliminates the need to remove the excess portion of a conventional band clamp, thus eliminating a sharp severed band edge that may damage the wire harness or injure the installation technician, and also eliminates material wastage.

Further, the wire clamp of the present invention need not be permanently attached to the wire harness before the wire harness is installed onto the vehicle body, but may be initially attached to the wire harness by hooking the lock claw over the lock notch after which the lock claw may be released to change the clamp location as means of accurately aligning the clamp with the mounting apertures on the vehicle body.

Moreover, the mechanism whereby the stop tab, which may be provided on at least one insertion member, is joined to the tab notch formed on the other insertion member, provides contact surfaces between the insertion members that prevent opposed horizontal displacement.

Although the invention has been described with reference to an exemplary embodiment, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed. Rather, the invention extends to all functionally equivalent structures, methods, and uses such as are within the scope of the appended claims.

The present disclosure relates to subject matter contained in priority Japanese Application No. JP 2002-264685, filed on September 10, 2002, which is herein expressly incorporated by reference in its entirety.
A one-piece band clamp that simplifies the installation of a wire harness. The band clamp includes a band portion whose separated ends form a space, and a pair of insertion members, each formed at an end of a band portion adjacent to the space. The insertion members include insertion plates, lock fingers which include lip portions extending outward and downward from the upper edge of the insertion plates, a lock claw formed on at least one insertion plate, and at least one lock notch formed on the facing insertion plate. The wire harness is inserted into a band portion through the space, the lock claws are hooked over the lock notches to join insertion members, which are then inserted into an aperture in a vehicle body panel. Lip portions of the lock fingers press against the edges of the aperture to secure the band clamp to the vehicle body panel.

## Claims

1. A band clamp comprising:
a band portion having first and second ends;
a first insertion member provided on said first end of said band portion and a second insertion member provided on said second end of said band portion;
a first lock finger extending outwardly and downwardly from an upper edge of said first insertion member and a second lock finger extending outwardly and downwardly from an upper edge of said second insertion member; and
a joining device configured to join together said first and second insertion members;
wherein, in a first position of said band clamp, a space is provided between said first insertion member on said first band portion end and said second insertion member on said second band portion end, said space configured to receive a wire harness therethrough, and in a second position, said space is closed and said first insertion member and said second insertion member are joined together by said joining device, said joined together first and second insertion members configured to be inserted into a mounting aperture in a vehicle body panel so that said first and second lock fingers secure the wire harness to the vehicle body panel.

2. The band clamp according to claim 1, wherein:
said first insertion member comprises a first insertion plate extending from said first band portion end;
said second insertion member comprises a second insertion plate extending from said second band portion end; and
wherein, in said second position, said first and second insertion plates arejoined together forming an insertion peg configured to be inserted into the mounting aperture in the vehicle body panel.

3. The band clamp according to claim 1 or 2, further comprising:
a first lip portion provided at an end of said first lock finger and a second lip portion provided at an end of said second lock finger;
wherein, said first and second lip portions are configured to contact edges of the mounting aperture in the vehicle body panel when said band clamp is in said second position.

4. The band clamp according to claim 3, further comprising:
a first semicircular flange provided on said first insertion member and a second semicircular flange provided on said second insertion member;
wherein, in said second position, said first and second semicircular flanges are joined together forming a substantially circular flange, said substantially circular flange configured to contact the edges of the mounting aperture on an opposite surface of the vehicle body panel so that the edges of the mounting aperture are positioned between said first and second lip portions and said substantially circular flange.

5. The band clamp according to any of claims 1 to 4, wherein said band clamp is formed unitarily and in one piece.

6. The band clamp according to any of claims 1 to 5, said joining device further comprising:
an inwardly extending L-shaped lock claw provided on at least one of said insertion members; and
a lock notch provided as a recessed portion at an upper edge of a facing one of said insertion members;
wherein, by hooking said lock claw over said lock notch said insertion members are joined together and said band portion is securely closed around the wire hamess.

7. The band clamp according to any of claims 1 to 6, said band clamp further comprising:
a stop tab provided as an inwardly extending portion of a lower edge of at least one of said insertion members; and
a tab notch provided within a facing one of said insertion members;
wherein in said second position said stop tab is inserted into said tab notch to form contact surfaces that prevent relative horizontal displacement between said first and second insertion members.

8. The band clamp according to any of claims 1 to 7, said joining device further comprising:
first and second L-shaped lock claws provided on said first insertion member, and a third L-shaped lock claw provided on said second insertion member; and
first and second lock notches provided on said second insertion member, said third L-shaped lock claw positioned between said first and second lock notches, and a third lock notch provided on said first insertion member, said third lock notch positioned between said first and second L-shaped lock claws;
wherein, by hooking said first, second, and third lock claws over said first, second, and third, lock notches, respectively, said first and second insertion members are joined together and said band portion is securely closed around the wire harness.

9. The band clamp according to any of claims 1 to 8, said band clamp further comprising:
a first stop tab provided as an inwardly extending portion of a lower edge of said first insertion member and a second stop tab provided as an inwardly extending portion of a lower edge of said second insertion member;
and a first tab notch provided on said first insertion member and a second tab notch provided on said second insertion member;
wherein in said second position said first stop tab is inserted into said second tab notch and said second stop tab is inserted into said first tab notch to form contact surfaces that prevent relative horizontal displacement between said first and second insertion members.

10. In combination, a vehicle body panel portion;
a wire harness; and
a band clamp according tto any of claims 1 to 9.
